# EUROPÄISCHE PATENTSCHRIFT

(11) **EP 2 527 803 B1**
(45) Veröffentlichungstag und Bekanntmachung des Hinweises auf die Patenterteilung: **21.10.2020**
(21) Anmeldenummer: 11167753.0
(22) Anmeldetag: 26.05.2011
(51) Int. Cl.: G01F 23/284

(54) **Messsystem mit einer druckfesten Durchführung**
Measuring system with a pressure-resistant feed-through
Système de mesure doté d'un passage résistant à la pression

(43) Veröffentlichungstag der Anmeldung: 28.11.2012
(73) Patentinhaber: VEGA Grieshaber KG, 77709 Wolfach (DE)
(72) Erfinder: Kienzle, Klaus, 77736 Zell am Harmersbach (DE); Motzer, Jürgen, 77723 Gengenbach (DE); Dietmeier, Jürgen, 77756 Hausach (DE)
(74) Vertreter: Maiwald Patent- und Rechtsanwaltsgesellschaft mbH

(56) Entgegenhaltungen:
- EP-A1- 1 083 414
- WO-A1-2010/105654
- US-A1- 2002 121 907

## Beschreibung

### Gebiet der Erfindung

Die Erfindung betrifft Hochdruckabdichtungen im Bereich der Füllstandmessung. Insbesondere betrifft die Erfindung eine Prozesstrennung für ein Füllstandmessgerät mit einer druckfesten Durchführung für einen Innenleiter, eine Einkopplung für ein Füllstandmessgerät zur Kopplung einer Prozessseite mit einer Steuerseite und ein Füllstandmessgerät mit einer Einkopplung.

### Technischer Hintergrund der Erfindung

Prozesstrennungen werden in Messgeräten eingesetzt, um eine Prozessseite und eine Steuerseite voneinander zu trennen. Auf der Prozessseite findet gewöhnlich die Messung einer physikalischen Größe statt, wobei auf der Prozessseite ein geeigneter Sensor zur Messung der zu messenden physikalischen Größe angebracht ist. Üblicherweise befinden sich auf der Steuerseite eine Steuerschaltung bzw, eine Auswerteschaltung sowie die Energieversorgung für den Sensor, der auf der Prozessseite angeordnet ist.

In Abhängigkeit der zu messenden physikalischen Größe auf der Prozessseite kann es erforderlich sein, dass die Prozessseite von der Steuerseite in geeigneter Weise getrennt wird, beispielsweise durch eine druckdichte Trennung, wenn beispielsweise die Prozessseite im Vergleich zur Steuerseite mit Druck beaufschlagt ist.

US 6,247,362 B1 zeigt eine Hochdruckprozesstrennung mit einem Innenleiter, einem Außenleiter und einer Druckabdichtung zwischen dem Innenleiter und dem Außenleiter. Die Druckabdichtung weist eine längliche zylindrische Form auf und entsprechend weist der Außenleiter einen zylindrischen Innendurchbruch in einer Richtung entlang der Längsachse auf, um die zylindrische Druckabdichtung so aufzunehmen, dass ein elektrischer Wellenwiderstand der Prozesstrennung sich nicht verändert.

Dabei erfolgt die Trennung einer Prozessseite von einer Steuerseite dadurch, dass die Druckabdichtung mit dem Innenleiter und dem Außenleiter eine kraftschlüssige Verbindung eingeht.

WO 2010/105654 A1 beschreibt eine koaxiale Durchführung, welche ausgeführt ist, in einer Wand eines Behältnisses angebracht zu werden und hochfrequente Signale von einer Steuereinrichtung zu einer Messeinrichtung zu übertragen. Dabei ist zwischen einem Innenleiter und einem Außenleiter ein Isolator angeordnet und sowohl der Innenleiter als auch der Außenleiter weisen einen sich verjüngenden Bereich auf.

US 2002/0121907 A1 beschreibt eine Durchführung für eine Messvorrichtung. Die Durchführung weist einen sich verjüngenden Verlauf auf. Zwischen der Durchführung und einem Außenleiter ist ein Isolator angeordnet, welcher eine sich verändernde Dielektrizitätskonstante aufweisen kann.

EP 1 083 414 A1 beschreibt eine Einkopplung für ein Füllstandmessgerät, wobei zumindest ein Abschnitt eines Innenleiters eine von einer Zylinderform abweichende Geometrie aufweist, um den Wellenwiderstand der Anordnung zu verändern.

### Zusammenfassung der Erfindung

Es kann als eine Aufgabe der Erfindung angesehen werden, eine Prozesstrennung mit einer alternativen Druckabdichtung anzugeben, ohne den elektrischen Wellenwiderstand der Prozesstrennung zu beeinflussen.

Es sind eine Prozesstrennung für ein Füllstandmessgerät mit einer druckfesten Durchführung, eine Einkopplung für ein Füllstandmessgerät und ein Füllstandmessgerät gemäß den Merkmalen der unabhängigen Patentansprüche angegeben. Weiterbildungen der Erfindung ergeben sich aus den Unteransprüchen und aus der folgenden Beschreibung.

Gemäß einem ersten Aspekt ist eine Prozesstrennung für ein Füllstandmessgerät mit einer druckfesten Durchführung für einen Innenleiter angegeben, welche einen Innenleiter, einen Außenleiter, eine Prozessseite, eine Steuerseite und eine Durchführung aufweist. Dabei verläuft eine Längsachse der Prozesstrennung von der Prozessseite zur Steuerseite. Der Innenleiter weist einen ersten konischen Bereich und/oder der Außenleiter einen zweiten konischen Bereich auf. Der erste konische Bereich und der zweite konische Bereich verjüngen sich in einer Richtung entlang der Längsachse der Prozesstrennung. Dabei umfasst die Durchführung den ersten konischen Bereich und/oder wird von dem zweiten konischen Bereich umfasst, um so eine formschlüssige Verbindung zwischen dem Innenleiter und dem Außenleiter herzustellen.

Der Innenleiter und der Außenleiter sind geeignet, eine Energieversorgung und Steuersignale von der Steuerseite auf die Prozessseite sowie elektrische Signale, welche einem von einem Sensor erfassten Messwert entsprechen, von der Prozessseite auf die Steuerseite zu übertragen.

Die Durchführung ist geeignet, eine Trennung der Steuerseite von der Prozessseite vorzunehmen, insbesondere einer Druckdifferenz zwischen Steuerseite und Prozessseite entgegenzuwirken. Weiterhin ist die Durchführung geeignet, den Innenleiter und den Außenleiter gegeneinander elektrisch zu isolieren.

Die Durchführung kann Materialien aufweisen, welche geeignet sind, eine elektrische Isolierung zu bewirken sowie einer vorgegebenen Druckdifferenz zwischen der Prozessseite und der Steuerseite entgegenzuwirken. Insbesondere kann es sich bei diesen Materialien um Kunststoffe, Glas oder Verbundstoffe handeln. Beispielsweise handelt es sich bei der Durchführung um eine Druckglasdurchführung.

Die Durchführung wirkt mit dem ersten konischen Bereich und/oder dem zweiten konischen Bereich so zusammen, dass eine formschlüssige Verbindung zwischen Innenleiter, Durchführung und Außenleiter bewirkt wird.

Diese formschlüssige Verbindung erhöht die Druckfestigkeit der Durchführung.

Eine Prozesstrennung wie oben und im Folgenden beschrieben kann am Innenleiter einen ersten konischen Bereich oder am Außenleiter einen zweiten konischen Bereich oder am Innenleiter einen ersten konischen Bereich und am Außenleiter einen zweiten konischen Bereich aufweisen.

Der erste konische Bereich und der zweite konische Bereich können insbesondere so ausgeführt sein, dass sie sich in die gleiche Richtung entlang der Längsachse der Prozesstrennung verjüngen. Beispielsweise verjüngen sich der erste konische Bereich und der zweite konische Bereich in einer Richtung von der Prozessseite zur Steuerseite entlang der Längsachse der Prozesstrennung.

Der erste konische Bereich und der zweite konische Bereich können sich aber auch in entgegengesetzte Richtungen entlang der Längsachse der Prozesstrennung verjüngen. Beispielsweise können sich der erste konische Bereich in einer Richtung von der Steuerseite zur Prozessseite und der zweite konische Bereich in einer Richtung von der Prozessseite zur Steuerseite verjüngen. Dieser Aufbau vermag eine verbesserte formschlüssige Verbindung zwischen dem Außenleiter, der Durchführung und dem Innenleiter herzustellen.

Selbstverständlich ist auch eine Umkehr der jeweiligen Verjüngungsrichtung des ersten konischen Bereiches und des zweiten konischen Bereiches möglich.

Der Verjüngungswinkel des ersten konischen Bereiches und der Verjüngungswinkel des zweiten konischen Bereiches können so eingestellt sein, dass der elektrische Wellenwiderstand der Prozesstrennung über den konischen Bereich gleich oder nahezu gleich bleibt. Insbesondere kann der Wellenwiderstand in der gesamten Prozesstrennung durchgängig bei 50 Ohm liegen. Der Wellenwiderstand der Prozesstrennung kann aber auch eine Abweichung von bis zu 10 % nach unten oder nach oben aufweisen.

Ein gleichbleibender oder nahezu gleichbleibender elektrischer Wellenwiderstand über den gesamten Verlauf der Prozesstrennung kann insbesondere von Bedeutung für Messgeräte sein, welche auf dem Zeitbereichsreflektometrieprinzip basieren (Time Domain Reflectometry, TDR), da die Messgenauigkeit dieser Messgeräte wesentlich von den Signalübertragungseigenschaften der gesamten Messvorrichtung abhängt.

Gemäß einer Ausführungsform der Erfindung ist ein Verjüngungswinkel α des ersten konischen Bereiches kleiner als ein Verjüngungswinkel β des zweiten konischen Bereiches.

Die Änderungen am Innenleiter durch den Verjüngungswinkel α des ersten konischen Bereiches beeinflussen den elektrischen Wellenwiderstand der Prozesstrennung stärker als dies die Änderungen am Außenleiter durch den Verjüngungswinkel β des zweiten konischen Bereiches tun.

Gemäß einer weiteren Ausführungsform der Erfindung beträgt der Verjüngungswinkel α 1 ° und der Verjüngungswinkel β 3°.

Der Verjüngungswinkel α und der Verjüngungswinkel β können selbstverständlich auch hiervon abweichende Winkelmaße annehmen. Beispielsweise kann der Verjüngungswinkel α bis zu 5° und der Verjüngungswinkel β bis zu 8° betragen.

Dabei können die Verjüngungswinkel so gewählt sein, dass der Wellenwiderstand der Prozesstrennung gleich oder nahezu gleich bleibt.

Gemäß der Erfindung weist der Außenleiter der Prozesstrennung einen zylindrischen Bereich auf. Dabei kann sich der zylindrische Bereich in einer Richtung entlang der Längsachse der Prozesstrennung an den zweiten konischen Bereich anschließen und einen geringeren Innendurchmesser als der zweite konische Bereich aufweisen. Durch den geringeren Innendurchmesser des zylindrischen Bereiches im Vergleich zum zweiten konischen Bereich wird eine in radialer Richtung der Prozesstrennung verlaufende Stirnfläche erzeugt, welche eine formschlüssige Verbindung mit der Durchführung so herstellt, dass eine Bewegung der Durchführung in einer Richtung entlang der Längsachse der Prozesstrennung von der Prozessseite zu der Steuerseite hin verhindert wird.

In anderen Worten handelt es sich bei der Stirnfläche um eine auf einer Innenseite des Außenleiters befindliche Stufe zwischen dem zylindrischen Bereich und dem zweiten konischen Bereich. In einer Richtung entlang der Längsachse der Prozesstrennung befindet sich die Stirnfläche zwischen der Durchführung und der Steuerseite, d. h., dass die Durchführung in einer Richtung von der Steuerseite zu der Prozessseite gegen die Stirnfläche gedrückt wird und so eine formschlüssige Verbindung hergestellt wird. Hierdurch können die Druckfestigkeit und die Dichtigkeit der Prozesstrennung weiter erhöht werden.

Gemäß der Erfindung weist die Prozesstrennung weiterhin ein Füllmaterial auf, welches in einen Zwischenraum eingebracht ist, welcher begrenzt wird durch den Innenleiter, den Außenleiter und die Durchführung.

Das Füllmaterial kann geeignet sein, eine Änderung des elektrischen Wellenwiderstandes der Prozesstrennung durch den geringeren Innendurchmesser des zylindrischen Bereiches im Vergleich zu dem Innendurchmesser des zweiten konischen Bereiches so auszugleichen, dass der Wellenwiderstand der Prozesstrennung sich nicht ändert, d. h. gleich oder nahezu gleich über den gesamten Verlauf der Prozesstrennung ist.

Insbesondere kann es sich bei dem Füllmaterial um ein Material mit einer kleineren Dielektrizitätskonstante als die Dielektrizitätskonstante der Durchführung handeln.

Die Dielektrizitätskonstante einer Glasdurchführung kann beispielsweise 4,9 AsV⁻¹m⁻¹ betragen. Als Füllmaterial kann beispielsweise Polyphenylensulfid mit einem Glasfaseranteil von 40 % (PPS GF 40) mit einer Dielektrizitätskonstante von ungefähr 3,7 AsV⁻¹m⁻¹ eingesetzt werden.

Durch die unterschiedlichen Dielektrizitätskonstanten der Durchführung und des Füllmaterials kann trotz der unregelmäßigen Innenfläche des Außenleiters ein konstanter Wellenwiderstand über die gesamte Prozesstrennung erreicht werden.

Gemäß einem weiteren Aspekt der Erfindung ist eine Einkopplung für ein Füllstandmessgerät zur Kopplung einer Prozessseite mit einer Steuerseite angegeben.

Die Einkopplung weist eine Prozesstrennung wie oben und im Folgenden beschrieben, einen Prozessanschluss und einen Steueranschluss auf

Der Prozessanschluss kann dabei an die Gegebenheiten der Messumgebung angepasst sein. Beispielsweise kann es sich bei dem Prozessanschluss um ein Kopplungselement handeln, welches an einen druckbeaufschlagten Behälter gekoppelt werden kann.

Der Prozessanschluss kann hierzu beispielsweise mit einem Flansch oder einem Gewinde versehen sein.

Der Steueranschluss ermöglicht den Anschluss einer Energieversorgung, einer Auswerteeinheit und einer Steuereinheit an die Einkopplung.

Die Einkopplung wie oben und im Folgenden beschrieben kann insbesondere vorteilhaft bei Anwendungen mit Ammoniak oder Halogenkohlenwasserstoffen, beispielsweise Freon, eingesetzt werden.

Gemäß einer Ausführungsform der Erfindung ist die Prozesstrennung modular mit dem Prozessanschluss und dem Steueranschluss verbunden.

Die modulare Verbindung von Steueranschluss, Prozesstrennung und Prozessanschluss setzt einen festgelegten und gleichbleibenden Kopplungsmechanismus zwischen einerseits Steueranschluss und Prozesstrennung und andererseits Prozesstrennung und Prozessanschluss voraus.

Die Modularität der Elemente der Einkopplung ermöglicht vorteilhafterweise die Verwendung gleicher Prozesstrennungen mit variierenden Steueranschlüssen und Prozessanschlüssen, so dass bei einem Wechsel der Messumgebung oder der Steuereinheit, welche an dem Steueranschluss angeschlossen wird, eine gleichbleibende Prozesstrennung verwendet werden kann.

Gemäß einem weiteren Aspekt der Erfindung ist ein Füllstandmessgerät mit einer Einkopplung wie oben und im Folgenden beschrieben angegeben.

Gemäß einer Ausführungsform der Erfindung ist das Füllstandmessgerät ein Zeitbereichsreflektometrie-Messgerät (Time Domain Reflectometry, TDR).

Gemäß einer weiteren Ausführungsform der Erfindung ist das Füllstandmessgerät ein Füllstandradar.

Im Folgenden werden mit Verweis auf die Figuren Ausführungsbeispiele der Erfindung beschrieben.

Kurze Beschreibung der Figuren
Fig. 1 zeigt eine Prozesstrennung gemäß einem Ausführungsbeispiel der Erfindung.
Fig. 2 zeigt eine Prozesstrennung gemäß einem weiteren Ausführungsbeispiel der Erfindung.
Fig. 3 zeigt eine Prozesstrennung gemäß einem weiteren. Ausführungsbeispiel, das nicht Teil der Erfindung ist.
Fig. 4 zeigt eine Einkopplung gemäß einem Ausführungsbeispiel der Erfindung.
Fig. 5 zeigt eine schematische Ansicht eines Füllstandmessgerätes gemäß einem Ausführungsbeispiel der Erfindung.
Fig. 6 zeigt eine Einkopplung gemäß einem weiteren Ausführungsbeispiel der Erfindung.
Fig. 7 zeigt eine Einkopplung gemäß einem weiteren Ausführungsbeispiel der Erfindung.

### Detaillierte Beschreibung von Ausführungsbeispielen

Die Darstellungen in den Figuren sind schematisch und nicht maßstabsgetreu.

Werden in der folgenden Figurenbeschreibung gleiche Bezugsziffern verwendet, so betreffen diese gleiche oder ähnliche Elemente.

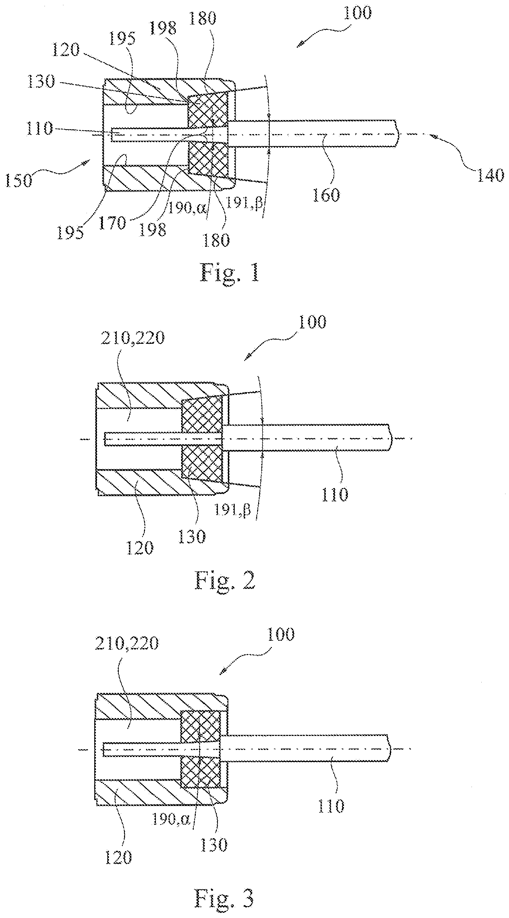

Fig. 1 zeigt eine Prozesstrennung 100 gemäß einem Ausführungsbeispiel der Erfindung. Die Prozesstrennung 100 weist einen Innenleiter 110, einen Außenleiter 120 und eine Durchführung 130 auf. Eine Längsachse 160 der Prozesstrennung verläuft von der Prozessseite 140 zur Steuerseite 150.

Der Innenleiter 110 weist einen ersten konischen Bereich 170 auf und der Außenleiter 120 weist einen zweiten konischen Bereich 180 auf.

Weiterhin weist der Außenleiter 120 einen zylindrischen Bereich 195 auf. Dabei weist der zylindrische Bereich 195 einen geringeren Innendurchmesser auf als der zweite konische Bereich 180. Dadurch entsteht am zylindrischen Bereich eine Stirnfläche 198, an welcher die Durchführung 130 anliegt.

Der erste konische Bereich 170 weist einen Verjüngungswinkel α 190 und der zweite konische Bereich 180 einen Verjüngungswinkel β 191 auf. Der erste konische Bereich 170 und der zweite konische Bereich 180 verjüngen sich in einer Richtung entlang der Längsachse 160 von der Prozessseite 140 zu der Steuerseite 150.

Die Durchführung 130 stellt zwischen dem Innenleiter 110 und dem Außenleiter 120 über den ersten konischen Bereich 170, den zweiten konischen Bereich 180 und die Stirnfläche 198 eine formschlüssige Verbindung her, so dass die Durchführung 130 nicht in einer Richtung von der Prozessseite 140 zu der Steuerseite 150 gedrückt werden kann.

Der Verjüngungswinkel a, der Verjüngungswinkel β und das Ausmaß der Stirnfläche 198 können in Abhängigkeit der zu erzielenden Druckfestigkeit der Durchführung variiert werden. Beispielsweise können sie so ausgeführt sein, dass ein Druck auf der Prozessseite von 100 bis 160 bar anliegen kann.

Fig. 2 zeigt eine Prozesstrennung 100 gemäß einem weiteren Ausführungsbeispiel der Erfindung mit einem Innenleiter 110 und einem Außenleiter 120 mit einer Durchführung 130.

Der Innenleiter 110 weist über seinen Verlauf entlang der Längsachse der Prozesstrennung eine zylindrische Form auf. Der Außenleiter 120 weist einen zweiten konischen Bereich mit einem Verjüngungswinkel β 191 auf

Weiterhin ist in Fig. 2 der Zwischenraum 220 gekennzeichnet, welcher von dem Außenleiter, dem Innenleiter und der Durchführung begrenzt wird. Der Zwischenraum 220 kann ein Füllmaterial 210 enthalten.

Fig. 3 zeigt eine Prozesstrennung 100 gemäß einem weiteren, Ausführungsbeispiel, das nicht Teil der Erfindung ist. Die Prozesstrennung weist einen Innenleiter 110, einen Außenleiter 120 und eine Durchführung 130 auf.

Im Gegensatz zu Fig, 2 zeigt Fig. 3 einen ersten konischen Bereich am Innenleiter 110 mit einem Verjüngungswinkel α 190. Dabei verjüngt sich der erste konische Bereich von der Prozessseite 140 zur Steuerseite 150. Der erste konische Bereich wie oben und im Folgenden beschrieben kann sich aber auch in einer Richtung von der Steuerseite zur Prozessseite verjüngen.

Der in Fig. 2 gezeigte Außenleiter weist keinen konischen Bereich auf.

Die Ausführungsbeispiele in Fig. 1, Fig. 2 und Fig. 3 zeigen jeweils eine Durchführung 130, welche eine formschlüssige Verbindung zwischen dem Innenleiter 110 und dem Außenleiter 120 herstellt.

Fig, 4 zeigt eine Einkopplung 400 gemäß einem Ausführungsbeispiel der Erfindung.

Die Einkopplung 400 weist eine wie oben und im Folgenden beschriebene Prozesstrennung 100, einen Prozessanschluss 410 und einen Steueranschluss 420 auf, wobei an der Steuerseite 150 eine Steuereinheit (nicht gezeigt) angekoppelt ist.

Insbesondere kann der Steueranschluss 420 ausgeführt sein, den Zwischenraum 220 mit dem Füllmaterial 210 zusammen mit der wie oben und im Folgenden beschriebenen Prozesstrennung abzuschließen.

Der Prozessanschluss 410 kann mit der Messumgebung, beispielsweise einem Behälter, über ein Gewinde, einen Flansch oder in sonstiger Weise unter Berücksichtigung der Gegebenheiten der Messumgebung insbesondere druckdicht verbunden werden.

Der Steueranschluss 420 ist ausgeführt, die Einkopplung mit einer Steuereinheit zu verbinden.

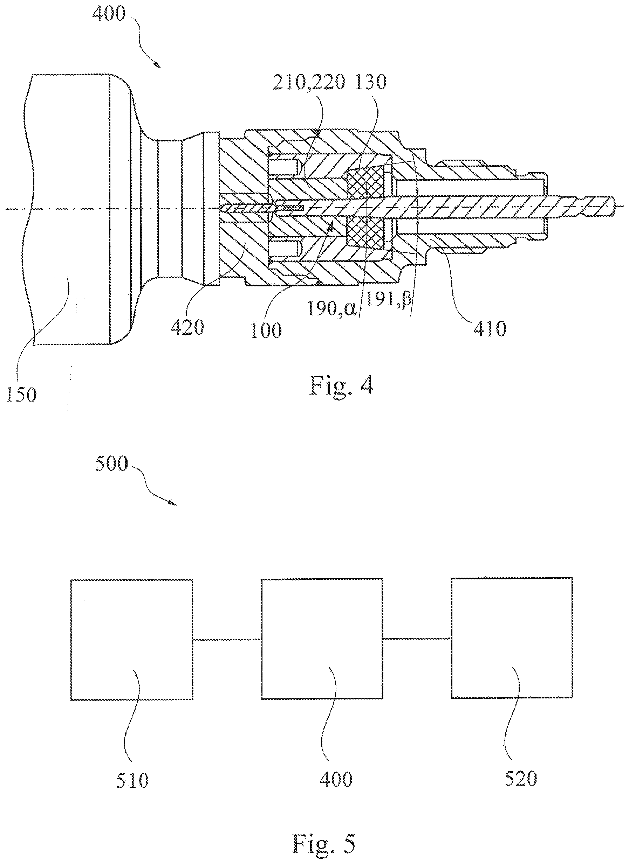

Fig. 5 zeigt eine schematische Ansicht eines Füllstandmessgerätes 500 gemäß einem Ausführungsbeispiel der Erfindung.

Das Füllstandmessgerät 500 umfasst eine Steuereinheit 510, eine Einkopplung 400 wie oben und im Folgenden beschrieben sowie eine Messeinheit 520.

Die Steuereinheit 510 kann ausgeführt sein, die Einkopplung 400 mit Energie zu versorgen und kann eine Auswerte- und Steuerschaltung aufweisen.

Bei der Messeinrichtung 520 kann es sich um einen beliebigen Sensor handeln, beispielsweise geeignet für die Zeitbereichsreflektometrie.

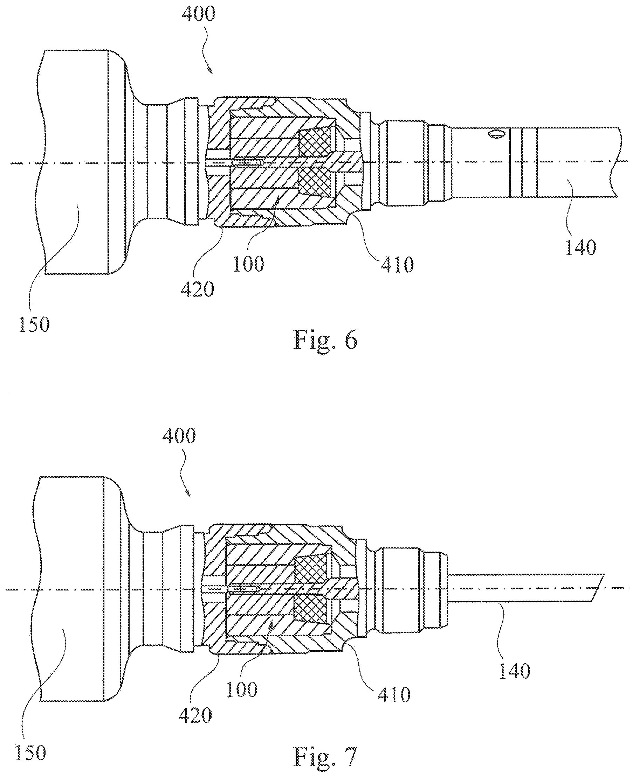

Fig. 6 zeigt eine Einkopplung 400 gemäß einem weiteren Ausführungsbeispiel der Erfindung.

Die Einkopplung 400 ist auf der Prozessseite 140 über den Prozessanschluss 410 mit einer Koaxialsonde verbunden.

Auf der Steuerseite 150 ist die Einkopplung 400 über den Steueranschluss 420 mit einer Steuereinheit (nicht gezeigt) verbunden.

Die Koaxialsonde funktioniert nach dem Prinzip der Zeitbereichsreflektometrie und ist geeignet, beispielsweise einen Ölstand eines Behälters zu messen. Der Innenleiter und der Außenleiter der Koaxialsonde werden über die Einkopplung 400, insbesondere über die Prozesstrennung 100 geführt und an die Steuereinheit übertragen.

Fig. 7 zeigt eine Einkopplung 400 gemäß einem weiteren Ausführungsbeispiel der Erfindung.

Auf der Prozessseite 140 ist eine Stabsonde an den Prozessanschluss 410 der Einkopplung 400 angeschlossen. Die Stabsonde wird als Innenleiter durch die Einkopplung 400 und die Prozesstrennung 100 zu einer auf der Prozessseite 150 über den Prozessanschluss 420 angeschlossenen Steuereinheit geführt.

Der für die Messung notwendige Außenleiter wird in diesem Ausführungsbeispiel von dem Prozessanschluss 410 dargestellt, welcher beispielsweise an einem elektrisch leitenden Behälter angeschlossen ist, wobei der Behälter mit als Außenleiter fungiert.

Fig. 6 und Fig. 7 zeigen den modularen Aufbau der Einkopplung 400. Es wird die gleiche Prozesstrennung 100 mit jeweils einem Prozessanschluss 410 gezeigt, an dem eine Koaxialsonde bzw. eine Stabsonde angeschlossen ist.

Daneben können an dem Prozessanschluss auch andere Sonden angeschlossen sein, beispielsweise Seilsonden oder Mehrstabsonden.

Der Prozessanschluss kann beispielsweise mittels eines Gewindes oder weiteren geeigneten Verbindungsmechanismen mit der Prozesstrennung verbunden werden. Diese Verbindung kann durch Kleben des Gewindes oder durch verschweißen der Teile auch nicht mehr lösbar ausgeführt sein.

Der Prozessanschluss kann beispielsweise mittels eines Einschraubgewindes, eines Flansches oder weiteren geeigneten Verbindungsmechanismen mit dem Behälter verbunden werden.

Speziell in der Lebensmittelindustrie gibt es verschiedene branchenübliche Behälteranschlüsse beispielsweise werden die Messgeräte dort mittels einer Milchrohrverschraubung oder einer Klemmverbindung befestigt.

In Entsprechung zu den verschiedenen Prozessanschlüssen können unterschiedliche Steueranschlüsse 420 verwendet werden. Diese Steueranschlüsse können beispielsweise je nach Behälter- bzw. Mediumstemperatur unterschiedlich lang ausgeführt sein, um eine thermische Überlastung der Steuereinheit zu vermeiden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Prozesstrennung (100) für ein Füllstandmessgerät mit einer druckfesten Durchführung (130) für einen Innenleiter (110), aufweisend:
einen Innenleiter (110);
einen Außenleiter (120);
eine Prozessseite (140);
eine Steuerseite (150);
eine Durchführung (130);
ein Füllmaterial (210);
wobei der Innenleiter und der Außenleiter geeignet sind, elektrische Signale, welche einem von einem Sensor erfassten Messwert entsprechen, von der Prozessseite auf die Steuerseite zu übertragen;
wobei eine Längsachse (160) der Prozesstrennung (100) von der Prozessseite (140) zur Steuerseite (150) verläuft;
wobei der Außenleiter (120) eine Innenfläche mit einem zweiten konischen Bereich (180) aufweist;
wobei der Außenleiter (120) eine Innenfläche mit einem zylindrischen Bereich (195) aufweist,
wobei die Innenfläche mit dem zylindrischen Bereich (195) einen geringeren Innendurchmesser als die Innenfläche mit dem zweiten konischen Bereich (180) aufweist, und wobei die Innenfläche mit dem zylindrischen Bereich (195) sich in einer Richtung entlang der Längsachse der Prozesstrennung (100) an die Innenfläche mit dem zweiten konischen Bereich (180) anschließt,
so dass der Außenleiter (120) eine Stirnfläche (198) zwischen der Innenfläche mit dem zweiten konischen Bereich (180) und der Innenfläche mit dem zylindrischen Bereich (195) bildet;
wobei der zweite konische Bereich (180) sich in einer Richtung entlang der Längsachse (160) der Prozesstrennung (100) verjüngen;
wobei die Durchführung (130) von dem zweiten konischen Bereich (180) umfasst wird und so eine formschlüssige Verbindung zwischen dem Innenleiter (110) und dem Außenleiter (120) herstellt;
wobei die in radialer Richtung der Prozesstrennung verlaufende Stirnfläche (198) in Form einer Stufe zwischen dem zylindrischen Bereich (195) und dem zweiten konischen Bereich (180) eine formschlüssige Verbindung mit der Durchführung (130) herstellt, so dass eine Bewegung der Durchführung (130) in einer Richtung entlang der Längsachse der Prozesstrennung von der Prozessseite zu der Steuerseite hin verhindert wird,
wobei das Füllmaterial (210) in einen Zwischenraum (220) eingebracht ist und wobei der Zwischenraum (220) begrenzt wird durch den Innenleiter (110), den zylindrischen Bereich des Außenleiters (120) und die Durchführung (130), und
wobei das Füllmaterial (210) eine kleinere Dielektrizitätskonstante aufweist als die Durchführung (130), so dass ein im Wesentlichen konstanter Wellenwiderstand über die gesamte Prozesstrennung erreicht wird.

2. Prozesstrennung (100) nach Anspruch 1,
wobei der Innenleiter (110) einen ersten konischen Bereich (170) aufweist;
wobei ein Verjüngungswinkel a (190) des ersten konischen Bereiches (170) kleiner ist als ein Verjüngungswinkel β (191) des zweiten konischen Bereiches (180).

3. Prozesstrennung (100) nach Anspruch 2,
wobei der Verjüngungswinkel a (190) 1° und der Verjüngungswinkel β (191) 3° beträgt.

4. Prozesstrennung (100) nach einem der Ansprüche 1 bis 3,
wobei das Füllmaterial (210) eine Änderung eines Wellenwiderstands der Prozesstrennung durch den geringeren Innendurchmessers des zylindrischen Bereichs im Vergleich zu einem Innendurchmesser des zweiten konischen Bereichs so ausgleicht, dass sich der Wellenwiderstand der Prozesstrennung entlang der Längsachse nicht wesentlich ändert.

5. Prozesstrennung (100) nach Anspruch 4,
wobei das Füllmaterial (210) aus Polyphenylensulfid mit einem Glasfaseranteil von 40 % besteht.

6. Einkopplung (400) für ein Füllstandmessgerät zur Kopplung einer Prozessseite (140) mit einer Steuerseite (150), aufweisend:
eine Prozesstrennung (100) nach einem der Ansprüche 1 bis 5;
einen Prozessanschluss (410);
einen Steueranschluss (420).

7. Einkopplung (400) nach Anspruch 6,
wobei die Prozesstrennung (100) modular mit dem Prozessanschluss (410) und dem Steueranschluss (420) verbunden ist.

8. Füllstandmessgerät (500) mit einer Einkopplung (400) nach einem der Ansprüche 6 oder 7.

9. Füllstandmessgerät (500) nach Anspruch 8,
wobei das Füllstandmessgerät (500) ein Zeitbereichsreflektometrie-Messgerät (Time Domain Reflectometry, TDR) ist.

10. Füllstandmessgerät (500) nach Anspruch 8,
wobei das Füllstandmessgerät ein Füllstandradar ist.

## Claims

1. A process separation (100) for a fill level measuring device with a pressure-resistant feedthrough (130) for an inner conductor (110), comprising
an inner conductor (110);
an outer conductor (120);
a process side (140);
a control side (150);
a feedthrough (130);
a filling material (210);
wherein the inner conductor (110) and the outer conductor (120) are suited for transferring electrical signals, which correspond to a value captured by a sensor, from the process side (140) to the control side (150);
wherein a longitudinal axis (160) of the process separation (100) extends from the process side (140) to the control side (150);
wherein the outer conductor (120) has an inner surface with a second conical portion (180);
wherein the outer conductor (120) has an inner surface with a cylindrical portion (195),
wherein the inner surface with the cylindrical portion (195) has a smaller inner diameter than the inner surface with the second conical portion (180), and wherein the inner surface with the cylindrical portion (195) is adjacent to the inner surface with the second conical portion (180) in a direction along the longitudinal axis of the process separation (100),
so that the outer conductor (120) forms a front surface (198) between the inner surface with the second conical portion (180) and the inner surface with the cylindrical portion (195);
wherein the second conical portion (180) tapers in a direction along the longitudinal axis (160) of the process separation (100);
wherein the feedthrough (130) is embraced by the second conical portion (180), thereby providing a positive-locking connection between the inner conductor (110) and the outer conductor (120);
wherein the front surface (198) extending in the radial direction of the process separation forms a step between the cylindrical portion (195) and the second tapered portion (180) to form an interlocking connection with the feedthrough (130) so as to prevent movement of the feedthrough (130) in a direction along the longitudinal axis of the process separation from the process side toward the control side,
wherein the filling material (210) is introduced into an intermediate space (220) and wherein the intermediate space (220) is delimited by the inner conductor (110), the cylindrical portion of the outer conductor (120) and the feedthrough (130), and
wherein the filler material (210) has a lower dielectric constant than the feedthrough (130) so that a substantially constant characteristic impedance is achieved throughout the process separation.

2. The process separation (100) according to claim 1,
wherein the inner conductor (110) has a first conical portion (170);
wherein a taper angle α (190) of the first conical portion (170) is smaller than a taper angle β (191) of the second conical portion (180).

3. The process separation (100) according to claim 2,
where the taper angle α (190) is 1° and the taper angle β (191) is 3°.

4. The process separation (100) according to one of claims 1 to 3,
wherein the filler material (210) compensates a change in a characteristic impedance of the process separation due to the smaller inner diameter of the cylindrical portion compared to an inner diameter of the second conical portion such that the characteristic impedance of the process separation does not change substantially along the longitudinal axis.

5. The process separation (100) according to claim 4,
wherein the filling material (210) consists of polyphenylene sulfide with a glass fiber content of 40%.

6. A coupling (400) for a level measuring device for coupling a process side (140) to a control side (150), comprising:
a process separation (100) according to any one of claims 1 to 5;
a process connection (410);
a control connection (420).

7. The coupling (400) according to claim 6,
wherein the process separation (100) is modularly connected to the process connection (410) and the control connection (420).

8. A fill level measuring device (500) with a coupling (400) according to one of claims 6 or 7.

9. The fill level measuring device (500) according to claim 8,
wherein the level meter (500) is a time domain reflectometry (TDR) meter.

10. The level measuring device (500) according to claim 8,
wherein the level gauge is a fill level radar.

## Revendications

1. Séparateur de processus (100) pour un appareil de mesure de niveau de remplissage avec une traversée (130) résistante à la pression pour un conducteur intérieur (110), présentant :
un conducteur intérieur (110) ;
un conducteur extérieur (120) ;
un côté processus (140) ;
un côté commande (150) ;
une traversée (130) ;
un matériau de remplissage (210) ;
dans lequel le conducteur intérieur et le conducteur extérieur sont aptes à transmettre des signaux électriques, qui correspondent à une valeur de mesure détectée par un capteur, du côté processus au côté commande ;
dans lequel un axe longitudinal (160) du séparateur de processus (100) s'étend du côté processus (140) au côté commande (150) ;
dans lequel le conducteur extérieur (120) présente une surface intérieure avec une deuxième zone conique (180) ;
dans lequel le conducteur extérieur (120) présente une surface intérieure avec une zone cylindrique (195),
dans lequel la surface intérieure avec la zone cylindrique (195) présente un diamètre intérieur plus petit que la surface intérieure avec la deuxième zone conique (180), et
dans lequel la surface intérieure avec la zone cylindrique (195) est adjacente à la surface intérieure avec la deuxième zone conique (180) dans une direction suivant l'axe longitudinal du séparateur de processus (100), de telle sorte que le conducteur extérieur (120) forme une surface frontale (198) entre la surface intérieure avec la deuxième zone conique (180) et la surface intérieure avec la zone cylindrique (195) ;
dans lequel la deuxième zone conique (180) s'effile dans une direction suivant l'axe longitudinal (160) du séparateur de processus (100) ;
dans lequel la traversée (130) est entourée par la deuxième zone conique (180) et établit ainsi une liaison par complémentarité de forme entre le conducteur intérieur (110) et le conducteur extérieur (120) ;
dans lequel la surface frontale (198) s'étendant dans la direction radiale du séparateur de processus sous la forme d'un gradin entre la zone cylindrique (195) et la deuxième zone conique (180) établit une liaison par complémentarité de forme avec la traversée (130), de sorte qu'un mouvement de la traversée (130) dans une direction suivant l'axe longitudinal du séparateur de processus du côté processus vers le côté commande est empêché,
dans lequel le matériau de remplissage (210) est introduit dans un espace intermédiaire (220) et dans lequel l'espace intermédiaire (220) est délimité par le conducteur intérieur (110), la zone cylindrique du conducteur extérieur (120) et la traversée (130), et
dans lequel le matériau de remplissage (210) présente une constante diélectrique inférieure à celle de la traversée (130), de sorte qu'une impédance d'onde sensiblement constante est obtenue sur tout le séparateur de processus.

2. Séparateur de processus (100) selon la revendication 1, dans lequel le conducteur intérieur (110) présente une première zone conique (170) ;
dans lequel un angle de conicité α (190) de la première zone conique (170) est plus petit qu'un angle de conicité β (191) de la deuxième zone conique (180).

3. Séparateur de processus (100) selon la revendication 2,
dans lequel l'angle de conicité α (190) est de 1° et l'angle de conicité β (191) est de 3°.

4. Séparateur de processus (100) selon l'une des revendications 1 à 3,
dans lequel le matériau de remplissage (210) compense un changement d'une impédance d'onde du séparateur de processus dû au diamètre intérieur plus petit de la zone cylindrique par rapport à un diamètre intérieur de la deuxième zone conique de telle sorte que l'impédance d'onde du séparateur de processus ne change pas sensiblement le long de l'axe longitudinal.

5. Séparateur de processus (100) selon la revendication 4,
dans lequel le matériau de remplissage (210) est constitué de sulfure de polyphénylène avec une teneur en fibres de verre de 40 %.

6. Coupleur (400) pour un appareil de mesure de niveau de remplissage, destiné à coupler un côté processus (140) à un côté commande (150), présentant :
un séparateur de processus (100) selon l'une des revendications 1 à 5 ;
un raccord de processus (410) ;
un raccord de commande (420).

7. Coupleur (400) selon la revendication 6,
dans lequel le séparateur de processus (100) est relié de manière modulaire au raccord de processus (410) et au raccord de commande (420).

8. Appareil de mesure de niveau de remplissage (500) avec un coupleur (400) selon l'une des revendications 6 ou 7.

9. Appareil de mesure de niveau de remplissage (500) selon la revendication 8,
lequel appareil de mesure de niveau de remplissage (500) est un appareil de mesure à réflectométrie temporelle (*Time Domain Reflectometry,* TDR).

10. Appareil de mesure de niveau de remplissage (5 00) selon la revendication 8,
lequel appareil de mesure de niveau de remplissage est un radar de niveau de remplissage.
